Europäisches Patentamt

European Patent Office

Office européen des brevets

(19)

(11) Veröffentlichungsnummer : **0 040 390**
**B1**

(12) # EUROPÄISCHE PATENTSCHRIFT

(45) Veröffentlichungstag der Patentschrift :
13.03.85

(21) Anmeldenummer : 81103655.7

(22) Anmeldetag : 12.05.81

(51) Int. Cl.⁴ : **G 01 L 23/10, G 01 L 23/22**

(54) **Drucksensor für Verbrennungsmotor.**

(30) Priorität : 16.05.80 DE 3018856
06.06.80 DE 3021452

(43) Veröffentlichungstag der Anmeldung :
25.11.81 Patentblatt 81/47

(45) Bekanntmachung des Hinweises auf die Patenterteilung : 13.03.85 Patentblatt 85/11

(84) Benannte Vertragsstaaten :
AT CH DE FR GB IT LI NL SE

(56) Entgegenhaltungen :
AT-B- 254 559
DE-A- 2 318 128
DE-A- 2 801 969
DE-A- 2 925 880
DE-C- 1 235 032
GB-A- 2 006 571
US-A- 2 917 642

(73) Patentinhaber : **Siemens Aktiengesellschaft**
**Berlin und München Wittelsbacherplatz 2**
**D-8000 München 2 (DE)**

(72) Erfinder : **Kleinschmidt, Peter, Dipl.-Phys.**
**Klagenfurter Strasse 12**
**D-8000 München 80 (DE)**
Erfinder : **Mágori, Valentin, Dipl.-Phys.**
**Limburgstrasse 17**
**D-8000 München 90 (DE)**

EP 0 040 390 B1

**Beschreibung**

Die vorliegende Erfindung bezieht sich auf einen Drucksensor entsprechend dem Oberbegriff des Anspruchs 1.

Aus dem Stand der Technik sind als Klopfsensor verwendete Drucksensoren für Verbrennungsmotore bekannt, die derart an dem Verbrennungsmotor angebracht sind, daß sie den im Zylinderinnenraum augenblicklich herrschenden Druck angeben.

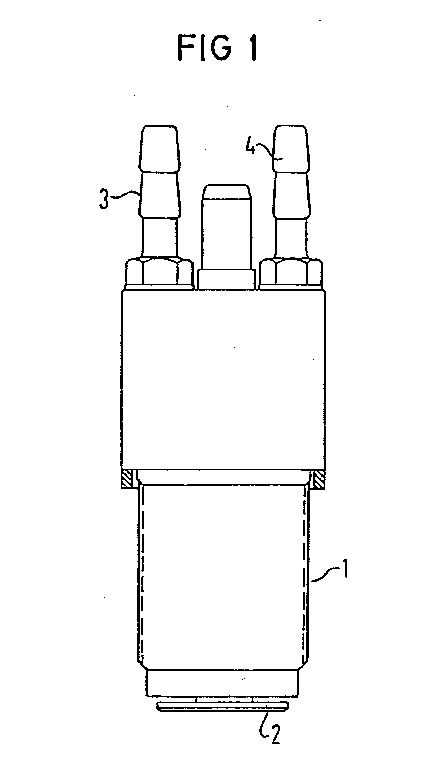

In Fig. 1 ist ein Quarzdruckgeber mit Kurzzeit-Temperaturkompensation abgebildet der der Type 12 QP 505 cl (clk), (Fa.Kistler) entspricht. Mit dem Gewinde 1 ist dieser Druckgeber in den Motor einzuschrauben, so daß die Platte 2 im Zylinderinnenraum den dort herrschenden Druckverhältnissen ausgesetzt ist. Mit 3 und 4 sind Anschlußstutzen für Kühlflüssigkeit bezeichnet. Der Preis eines solchen Quarzdruckgebers ist derart hoch, daß er nur für Diagnose-Geräte in Frage kommt.

Aus der DE-A-23 18 128 ist ein dem voranstehend beschriebenen Druckgeber entsprechender Druckmeßwandler bekannt, der ebenfalls einen Meßkristall enthält. Dieser Meßwandler hat eine gleichzeitig als Plattenvorspannfeder verwendete Dichtmembran. Zwischen dieser Dichtmembran und dem Meßkristall befindet sich ein Kraftübertragungsrohr. Das Druckmedium trifft dort über einen keramischen Hitzeschild auf die Membran, von wo aus der ausgeübte Druck über das Kraftübertragungsrohr auf den Meßkristall übertragen wird. Der Meßkristall selbst ist ein zylinderförmiger einstückiger Körper.

Aus der GB-A-20 06 571 ist ein anderer Drucksensor bekannt, der als piezokeramischen Druckaufnehmer einen kugelförmigen Körper besitzt, der mittels eines Rohres aus Glasfiber gehaltert ist. Diese Keramikkugel befindet sich im Innern eines ersten Teiles des Sensors. Zum Schutz der Kugel ist wahlweise ein topfförmiger Stahlkörper mit einer Öffnung für den Eintritt des Druckgases vorgesehen. Eine druckübertragende Verbindung zwischen dem Stahlkörper und der Keramikkugel ist nicht vorgesehen.

Die US-A-29 17 642 beschreibt einen noch anderen, auf Druck ansprechenden Wandler, der einen piezoelektrischen Kristall als Detektorelement enthält, der ganzflächig an einem sehr steifen Diaphragma anliegt. Zwischen dem Medium, dessen Druck zu messen ist, und diesem Diaphragma sind Druckübertragungselemente, so z. B. eine Anzahl Kugeln, vorgesehen.

Ein Sensor für Schwingungen ist in der DE-A-28 01 969 beschrieben, der für das Erfassen der beim Klopfen einer Brennkraftmaschine auftretenden Körperschwingungen verwendet werden soll. Es handelt sich dabei um eine freischwingende Zunge, wie sie in Zungenfrequenzmessern verwendet wird. Diese Zunge hat einen bilaminaren Aufbau, so daß sie aufgrund der piezoelektrischen Eigenschaft ihres Materials ein elektrisches Signal abgeben kann, wenn diese Zunge, d. h. ihr freies Ende, durch Klopfen der Maschine erzeugte freie Schwingungen ausführt.

Es ist eine Aufgabe der vorliegenden Erfindung, einen Drucksensor für Verbrennungsmotore anzugeben, der einen solchen technisch einfach zu realisierenden Aufbau hat, daß dieser Drucksensor als dauernd installiertes Bauteil des Motors, insbesondere im Zusammenhang mit computergesteuerter Betriebsweise des Motors, zur Verwendung in Frage kommt.

Diese Aufgabe wird mit einem Drucksensor nach dem Oberbegriff des Anspruchs 1 erfindungsgemäß mit den Merkmalen des Kennzeichens des Anspruchs 1 gelöst. Aus den Unteransprüchen gehen weitere Ausgestaltungen und Weiterbildungen der Erfindung hervor.

Der vorliegenden Erfindung liegt der Gedanke zugrunde, statt eines Quarzes als piezoelektrischem Wandlerelement ein solches aus Piezokeramik zu verwenden, das jedoch keiner höheren Temperatur als z. B. 150 °C ausgesetzt sein darf. Bei höherer Temperatur würde die piezoelektrische Keramik diesen Effekt irreversibel verlieren.

Zur Lösung der Aufgabe unter Berücksichtigung des obigen Grundgedankens ist vorgesehen, den piezokeramischen Wandler des erfindungsgemäßen Drucksensors so einzubauen, daß er ausreichenden Schutz vor der hohen Erhitzung im Zylinderinnenraum hat, jedoch wirklichkeitsgetreu die im Zylinderinnenraum herrschenden Druckbedingungen wiederzugeben vermag. Dieser Lösung entsprechend ist ein Bauteil nach der prinzipiellen Art eines Stössels vorgesehen, mit dem die Bewegung einer vom Druckverlauf im Zylinderinnenraum beaufschlagten Membran auf ein piezokeramisches Biegeelement übertragen wird, das für den hier vorliegenden speziellen Zweck und für die hier vorliegenden speziellen physikalischen Bedingungen angepaßt ausgebildet ist. Dieses piezokeramische Element ist ein bilaminares Biegeelement, bestehend aus einer Metallplatte und einer daran befestigten Scheibe aus Piezokeramik mit einer Anschlußelektrode als Gegenelektrode zur Metallplatte. Dieser aus Metallplatte und Keramikscheibe bestehende Wandler ist in einfacher Weise angepaßt in den erfindungsgemäßen Drucksensor eingebaut.

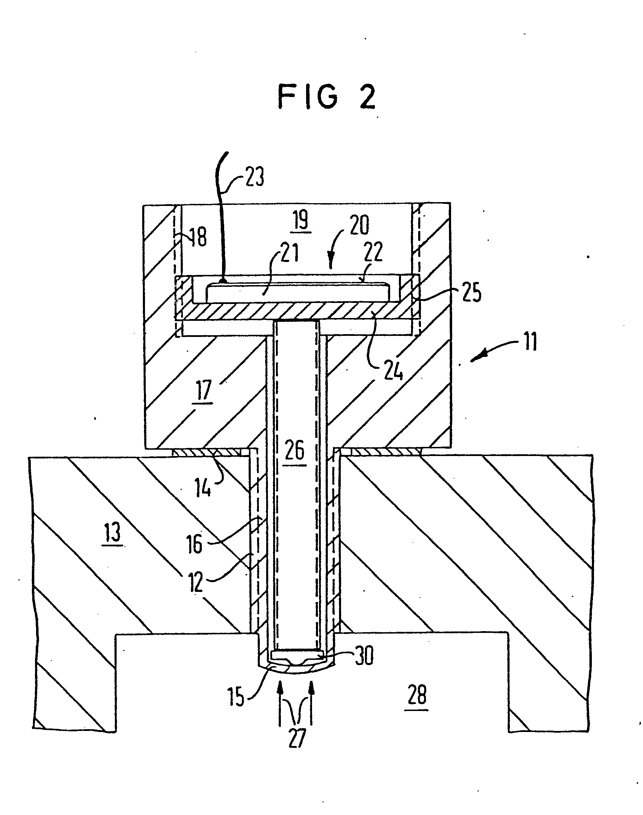

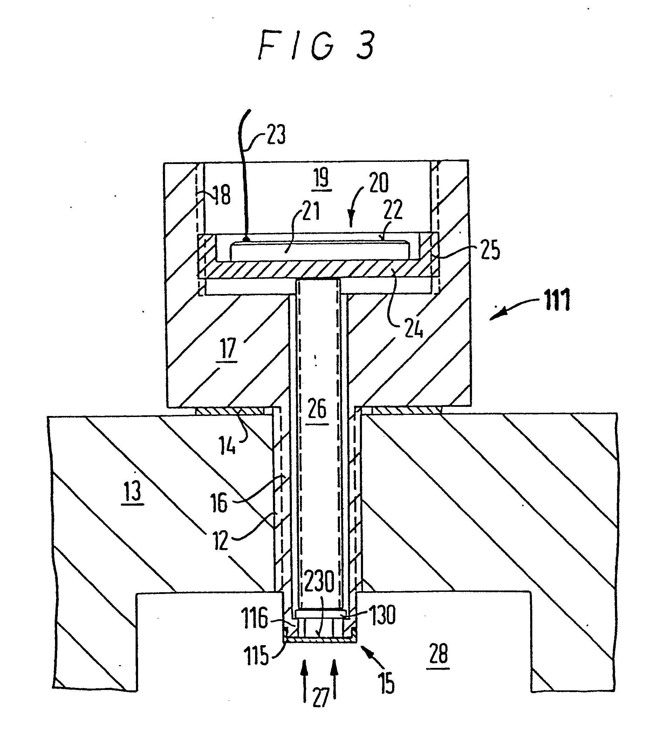

Weitere Erläuterungen der Erfindung gehen aus der nachfolgenden Beschreibung der in den Figuren 2 und 3 dargestellten Ausführungsbeispiele hervor.

Mit 11 ist der erfindungsgemäße Drucksensor in seiner Gesamtheit bezeichnet. Mit dem Gewinde 12 ist dieser Drucksensor 11 in den Zylinderkopf 13 eines Verbrennungsmotors gasdicht, und zwar insbesondere unter Verwendung eines relativ harten Dichtringes 14, eingeschraubt. Dieser Dichtring 14 kann ein Kupferring sein. Über diesen Ring 14 stützt sich das Wandlergehäuse schlüssig gegen die Zylinderkopfaußenwand ab. Das Gewinde 12 ist Anteil eines am vorderen Ende 15 geschlossenen Rohrstückes 16, das wiederum eine Fortsetzung des Drucksensor-Gehäuses 17 ist. Mit 18 ist ein weiteres Gewinde bezeichnet, das sich rückseitig in einer Ausnehmung 19 des Drucksensor-Gehäuses 17 befindet. Dieses Gewinde 18 dient dazu, den insgesamt mit 20 bezeichneten Sensorwandler in dem Gehäuse 17 in technisch einfacher Weise zu befestigen.

Der Sensorwandler 20 hat bei dem dargestellten Ausführungsbeispiel der Erfindung als Keramikkörper eine Platte 21 aus permanent polarisierbarer piezoelektrischer Keramik, wie z. B. Bleizirkonat-Titanat. Dieses Keramikmaterial hat eine Curie-Temperatur von beispielsweise über 300 °C und kann somit ohne weiteres Betriebstemperaturen bis 150 °C ertragen. Es hat einen hohen piezoelektrischen Effekt, d. h. hohen Kopplungsfaktor. Auf ihrer einen Oberfläche hat die Platte 21 eine die für Keramik übliche Elektrodenbeschichtung 22, an der eine Anschlußleitung 23 befestigt ist. Mit der der Elektrodenschicht 22 gegenüberliegenden Plattenseite ist diese Platte 21 mit einer wie aus der Figur ersichtlichen, im wesentlichen scheibenförmigen Metallplatte 24 fest verbunden. Die Keramikplatte 21 und die Metallplatte 24 bilden damit zusammen einen bimorphen oder bilaminaren piezoelektrischen Biege-Sensorwandler 20.

Der Sensorwandler 20 ist vorzugsweise an seinem äußeren Rand, und zwar vorzugsweise mit der Metallplatte, in dem Gehäuse 17 eingebaut. Vorteilhaft ist der wie dargestellte Einbau mit Hilfe eines Gewindes 25 am äußeren Rand der Metallplatte 24. Der ganze Wandler läßt sich damit leicht in das Gehäuse 17 einschrauben. Damit läßt sich auch die Metallplatte 24 über den Gewinderand 25 von dem Gehäuse 17 her gut kühlen, so daß von dem vorderen Ende 15 des Drucksensors her in diesen gelangende Wärme vor Erreichen der Keramikplatte 21 weitestgehend abgeleitet werden kann.

Das Einschrauben des Wandlers 20 mit Hilfe des Gewindes 18/25 ermöglicht es, den als Übertragungsverbindung vorgesehenen Stössel 26 zwischen dem Wandler 20 und dem vorderen Ende 15 des Rohrstückes 16 fest einzuspannen, so daß das als Membran wirksame vordere Ende 15 des Rohrstückes 16, der Wandler 20 und der Stössel 26 unter einer mechanischen Vorspannung stehen können. Diese Druckvorspannung wird so hoch gewählt, daß bei jeglicher thermischer Ausdehnung eines Teils des gesamten Sensors der Wandler 20 gegenüber dem Ende 15 stets unter Vorspannung bleibt. Mit 30 ist eine zusätzliche gegebenenfalls vorzusehende Zentrierscheibe bezeichnet.

Das vordere Ende 15 des Drucksensors 11 ist so ausgebildet und so bemessen, daß es als druckübertragende Membran wirksam ist. Im Zylinderinnenraum 28 mit den Pfeilen 27 angedeutet herrschender Druck kann über dieses als sich biegende Druckmembran wirkende Ende 15 über den Stössel 26 als Übertragungsverbindung auf den Sensorwandler 20 übertragen werden. Diese über die Membran 15, den Stössel 26 auf den Wandler 20 übertragene Druckkraft 27 wird in der sich unter dieser Kraft biegenden piezokeramischen Platte 21 des Wandlers 20 in ein zwischen dem Anschluß 23 und dem Gehäuse 17 abzunehmendes elektrisches Signal umgewandelt. Dieses elektrische Signal wird dann elektronisch (wie bei dem eingangs beschriebenen bekannten Druckgeber) in der jeweils gewünschten Weise ausgewertet.

Eine verbesserte Ausgestaltung bezüglich des vorderen Endes des Drucksensors 111 zeigt Fig. 3. Es ist dort ebenfalls eine gasdicht abschließende druckübertragende Membran 115 z. B. aus Titan vorgesehen, über die hinweg der Druck 27 auf die Druckaufnahmefläche 230 der Zentrierscheibe 130 und weiter über den Stössel 26 auf den Sensorwandler 20 übertragen werden kann. Wie dargestellt, ist das vordere Ende des Rohrstückes 16 als Ansatz 116 ausgebildet, auf dem der Stössel 26 oder die Scheibe 130 aufliegt. Der Wandler 20 und der Stössel 26 können so gegen diesen Ansatz 116 wieder unter einer Vorspannung gehalten werden, ohne daß hier jedoch diese Vorspannung dauernd auf der Membran 115 lastet.

Diese verbesserte Ausführungsform des Drucksensors 111 gewährleistet eine längere Lebensdauer der thermisch hoch belasteten Membran 115, die hier nicht mehr zusätzlich auch noch unter dauernder mechanischer Vorspannung steht. Übrige Einzelheiten der Fig. 3 haben die oben beschriebenen Bedeutungen und Funktionen.

Zum Beispiel läßt sich mit einem wie erfindungsgemäßen Drucksensor 11, 111 augenblicklich feststellen, ob sich der Lauf des Motors in einem als « Klopfen » oder « Klingeln » bekannten Betriebszustand befindet, der für die Lebensdauer des Motors sehr abträglich ist. Das Auftreten eines solchen Klopfens oder Klingelns kann durch entsprechende Verstellung auf Spätzündung behoben werden. Ansonsten läßt man den Motor zwecks Kraftstoffeinsparung mit angemessen relativ starker Frühzündung arbeiten.

Das Gehäuse 17 ist — wie nicht dargestellt — beispielsweise als Sechskant ausgebildet, um mit einem entsprechenden Schraubenschlüssel in den Zylinderkopf 13 dicht eingeschraubt zu werden.

Im Betrieb als Drucksensor liefert der Wandler 20 die dem zeitlichen Druckverlauf 27 entsprechenden Signale, die bei Vorliegen des Klopfens bestimmte charakteristische Form haben. Die Frequenz des Klopfens liegt zwischen 5 und 10 kHz, insbesondere bei 7 kHz. Der ganze Drucksensor 11, 111 ist so aufgebaut und bemessen, daß seine Eigenfrequenz vergleichsweise zu den als Drucksignal auftretenden Frequenzen hoch liegt, d. h. erheblich oberhalb 10 kHz. Für eine Resonanzfrequenz von 10 kHz muß die maximale Länge $l_0$ des Stössels 26 kleiner sein als ein Viertel der Wandlerlänge, mit der sich eine Welle mit 10 kHz Frequenz auf ihm ausbreiten kann. Für eine Schallgeschwindigkeit im Stössel von 5 000 m/s und eine obere Grenzfrequenz von 10 kHz ergibt sich eine Wellenlänge von $\lambda = 50$ cm. Die maximale Stössellänge ist damit auf $l_o = 12{,}5$ cm begrenzt. Durch Bemessung von Durchmesser und Dicke der Keramik 21 und der Metallplatte 24 soll ferner die Biegeresonanz dieses Verbundes so festgelegt werden, daß sie oberhalb und größenordnungsmäßig in der Nähe der oberen Grenzfrequenz (10 kHz) liegt. Wird sie wesentlich höher gewählt (zu dicker Bieger oder zu kleiner Durchmesser), nimmt die Empfindlichkeit des Drucksensors ab. Liegt sie tiefer, treten unerwünschte Resonanzerscheinungen auf.

Die Biegeresonanz läßt sich mit ausreichender Genauigkeit nach der Formel

$$f_{res} = 5\,000 \text{ mm} \cdot d/D^2 \text{ [kHz]}$$

abschätzen, wobei d die Gesamtdicke von Keramik 21 und Metallplatte 24 bedeutet und D den Durchmesser der Metallplatte 24 bis zum Rand 25 gemessen bedeutet.

Für ein D von 20 mm und ein d von 2 mm ergibt sich eine Resonanzfrequenz von

$$f_{res} = 25 \text{ kHz.}$$

Die elastische Nachgiebigkeit der Membran 15 bezüglich der Stösselkräfte soll in gleicher Größenordnung wie die elastische Nachgiebigkeit des Verbundes aus Keramik 21 und Metallplatte 24 liegen.

Die Größe des Biegeverbundes (Durchmesser D) ist durch seine träge Masse beschränkt. Die maximal zulässige Masse wird durch die elastische Nachgiebigkeit des Stössels begrenzt; kurze Stössel erlauben größere Massen. Wird die Stösselmasse als m bezeichnet, so soll die Masse des Biegeverbundes einen Wert M nicht überschreiten. M berechnet sich nach der Formel

$$M = 1/2 \ (l_o/l)^2 \cdot m,$$

wobei l die tatsächliche Länge des Stössels, $l_o$ die maximale Länge des Stössels (z. B. 12,5 cm bei 10 kHz Frequenzgrenze) und m die Masse des Stössels bedeuten.

Die absoluten Werte für die Maße ergeben sich mit obigen Gleichungen aus dem für den Einbau zur Verfügung stehenden Bohrungsdurchmessern im Zylinderkopf.

Es kann vorteilhaft sein, den Zwischenraum zwischen dem Stössel 26 und dem Metallteil 24 einerseits und dem Gehäuse 17 und dem Rohrstück 16 andererseits mit einem außerdem auch gut wärmeleitenden Fett (nicht dargestellt) o. dergl. zu füllen, das auch gewisse Schwingungsdämpfungseigenschaften hat. Die Wärme wird dadurch vom Stössel 26 an das im gekühlten Zylinderkopf 13 eingeschraubte Rohrstück 16 abgeleitet.

Probleme bekannter einschlägiger Drucksensoren ergeben die Umstände, die zu einer Signalabgabe führen, die gar nicht auf dem zu messenden Druck bzw. Druckverlauf beruhen. Durch rasch wechselnde Temperaturbeaufschlagungen, insbesondere des Membranendes 15, werden thermische Ausdehnungs- und/oder Biegebewegungen desselben herbeigeführt, die zu Störanzeigen führen können. Die Bemessung der Gehäuseteile 16, 17 und der Übertragungsverbindung 26 sind daher derart gewählt, daß stark unterschiedliche thermische Ausdehnungen derselben nicht vorliegen. Die gewählte Vorspannung des Wandlers gegen die Membran 15 bzw. die Scheibe 130 vermeidet ebenfalls diese Probleme.

Zum (weiteren) Schutz der Keramikscheibe 21 des Wandlers 20 gegen die hohen Temperaturen im Zylinderinnenraum 28 ist vorgesehen, den Stössel 26 möglichst wenig wärmeleitend auszubilden, diesen insbesondere aus V2A-Stahl herzustellen und/oder ein Hohlrohr als Stössel 26 zu verwenden.

Die in den Fig. 2, 3 dargestellten Ausführungsbeispiele haben z. B. einen 20 bis 30 mm langen Stössel 26 aus V2A-Stahl. Die Keramikplatte 21 hat etwa 10 mm ∅ und ist 1 mm dick. Die Metallplatte 24 ist ebenfalls 1 mm dick. Das Gewinde 12 kann ein M14-Zündkerzengewinde sein. Der zugehörige Zylinderkopf 13 hat eine weitere, der Zündkerzenaufnahme entsprechende Gewindebohrung zur Aufnahme des erfindungsgemäßen Drucksensors.

**Ansprüche**

1. Drucksensor für Verbrennungsmotor,
— mit einem piezoelektrischen Wandler (20),
— mit einer Membran (15) und
— mit einer starren Übertragungsverbindung (26) zwischen der Membran (15) und dem Wandler (20), die unter mechanischer Vorspannung in einem in den Motorblock einsetzbaren Gehäuse (16, 17) eingebaut sind,
gekennzeichnet dadurch,
— daß der Wandler (20) aus einer piezokeramischen Platte (21) und einer Metallplatte (24) besteht, die ganzflächig zu einem bilaminaren Biegeelement zusammengesetzt sind,
— daß der Wandler (20) am Rande eingespannt ist und
— daß der Wandler (20) im Gehäuse so angeordnet ist, daß die Metallplatte (24) der Wärmequelle des Verbrennungsmotors zugewandt ist.

2. Drucksensor nach Anspruch 1, gekennzeichnet dadurch, daß die Übertragungsverbindung ein Stössel (26) aus V2A-Stahl ist.

3. Drucksensor nach Anspruch 1 oder 2, gekennzeichnet dadurch, daß die Übertragungsverbindung ein Rohr (26) ist.

4. Drucksensor nach einem der Ansprüche 1 bis 3, gekennzeichnet dadurch, daß der Wandler (20) mit der Metallplatte (24) in ein Gewinde (18) des Gehäuses (17) derart einschraubbar ist, daß damit die Membran (15), die Übertragungsverbindung (26) und der Wandler (20) die vorgesehene mechanische Vorspannung erhalten.

5. Drucksensor nach einem der Ansprüche 1 bis 4, gekennzeichnet dadurch, daß die Metallplatte (24) des Wandlers (20) an ihrem Rande gut wärmeleitend mit dem wärmeableitenden Gehäuse (17) des Drucksensors verbunden ist.

6. Drucksensor nach einem der Ansprüche 1 bis 5,gekennzeichnet dadurch, daß die den Gasdruckkräften (27) im Zylinderinnenraum (28) ausgesetzte Membran (15) eine solche Wölbung besitzt, daß diese Membran (15) bei Erhitzung durch die Gase im Zylinderinnenraum (28) keinen Wechsel des jeweiligen Vorzeichens der einen oder mehreren Krümmungen dieser Wölbung ausführt.

7. Drucksensor nach einem der Ansprüche 2 bis 6, gekennzeichnet dadurch, daß die Vorspannung von einem im vorderen Ende (15) des Gehäuses (16, 17) befindlichen Ansatz (116) aufgenommen wird, gegen den sich der Stössel bzw. eine Zentrierscheibe (130) abstützt, so daß die Membran (115) im Ruhezustand von der Vorspannung entlastet ist.

8. Drucksensor nach Anspruch 7, gekennzeichnet dadurch, daß die Zentrierscheibe (130) zwischen dem Stössel (26) und der Membran (115) vorgesehen ist.

9. Drucksensor nach Anspruch 7 oder 8, gekennzeichnet dadurch, daß die Membran (115) ein dünnes Blech aus Titan, Tantal oder Wolfram ist.

**Claims**

1. A pressure sensor for an internal combustion engine, having
   — a piezoelectric transducer (20),
   — a membrane (15), and
   — a rigid transfer connection (26) between the membrane (15) and the transducer (20) which are installed under initial mechanical stress in a housing (16, 17) which can be inserted into the engine block,
characterised in that
   — the transducer (20) consists of a piezoceramic plate (21) and a metal plate (24), the entire surfaces of which are brought together to form a bilaminar bending element ;
   — that the transducer (20) is fixed at the edge ; and
   — that the transducer (20) is arranged in the housing in such a way that the metal plate (24) faces towards the heat source of the internal combustion engine.

2. A pressure sensor as claimed in Claim 1, characterised in that the transfer connection consists of a rod (26) made of V2A-steel.

3. A pressure sensor as claimed in Claim 1 or 2, characterised in that the transfer connection is a pipe (26).

4. A pressure sensor as claimed in one of Claims 1 to 3, characterised in that the transducer (20) including the metal plate (24) can be screwed into a thread (18) in the housing (17) in such a way

that the membrane (15), the transfer connection (26), and the transducer (20) thereby acquire the required initial mechanical stress.

5. A pressure sensor as claimed in one of Claims 1 to 4, characterised in that at its edge, the metal plate (24) of the transducer (20) is connected to the heat-discharging housing (17) of the pressure sensor, so as to provide good heat conduction.

6. A pressure sensor as claimed in one of Claims 1 to 5, characterised in that the membrane (15) which is exposed to the gas pressure forces (27) in the interior of the cylinder (28) possesses a curvature which is such that when heated by the gases in the cylinder interior (28), this membrane (15) does not produce any change in the particular sign of the curve or cuves of this curvature.

7. A pressure sensor as claimed in one of Claims 2 to 6, characterised in that the initial stress is absorbed by a projection (116) which is arranged at the front end (15) of the housing (16, 17) and against which rests the rod, or a centering disc (130), so that in the rest state, the membrane (115) is relieved of the stress.

8. A pressure sensor as claimed in Claim 7, characterised in that the centering disc (130) is arranged between the rod (26) and the membrane (115).

9. A pressure sensor as claimed in Claim 7 or 8, characterised in that the membrane (115) is a thin metal sheet of titanium, tantalum, or tungsten.

**Revendications**

1. Détecteur de pression pour moteur à combustion interne, comprenant,
   — un transducteur piézoélectrique (20),
   — une membrane (15) et
   — une liaison rigide de transmission (26) entre la membrane (15) et le transducteur piézoélectrique (20), qui est montée avec une précontrainte mécanique dans un boîtier (16, 17) pouvant être introduit dans le bloc-moteur,
caractérisé en ce que,
   — le transducteur (20) est constitué d'une plaque (21) en céramique piézoélectrique et d'une plaque métallique (24), qui sont assemblées suivant toute leur surface en un bilame flexible,
   — le transducteur (20) est serré par le bord et
   — le transducteur (20) est disposé dans le boîtier de manière à ce que la plaque métallique (24) soit du côté de la source de chaleur du moteur à combustion interne.

2. Détecteur de pression suivant la revendication 1, caractérisé en ce que la liaison de transmission est un poussoir (26) en acier V2A.

3. Détecteur de pression suivant la revendication 1 ou 2, caractérisé en ce que la liaison de transmission est un tube (26).

4. Détecteur de pression suivant l'une des revendications 1 à 3, caractérisé en ce que le transducteur (20), avec la plaque métallique (24), peut être vissé dans un taraudage (18) du boîtier (17) de manière à ce qu'ainsi la membrane (15), la liaison de transmission (26) et le transducteur (20) reçoivent la précontrainte mécanique prévue.

5. Détecteur de pression suivant l'une des revendications 1 à 4, caractérisé en ce que le bord de la plaque métallique (24) du transducteur (20) est relié, d'une manière conduisant bien la chaleur, au boîtier (17) du détecteur de pression qui dissipe la chaleur.

6. Détecteur de pression suivant l'une des revendications 1 à 5, caractérisé en ce que la membrane (15) soumise aux forces de pression du gaz (27) à l'intérieur du cylindre (28) possède une cambrure telle que, lorsque cette membrane (15) est chauffée par les gaz à l'intérieur du cylindre (28), il ne se produit aucun changement du signe de l'une ou de plusieurs courbes de cette cambrure.

7. Détecteur de pression suivant l'une des revendications 2 à 6, caractérisé en ce que la précontrainte est absorbée par une partie formant appui (116) qui se trouve à l'extrémité antérieure (15) du boîtier (16, 17) et contre laquelle porte le poussoir ou une rondelle de centrage (130), de sorte que la membrane (15) à l'état de repos est déchargée de la contrainte préalable.

8. Détecteur de pression suivant la revendication 7, caractérisé en ce que la rondelle de centrage (130) est prévue entre le poussoir (26) et la membrane (115).

9. Détecteur de pression suivant la revendication 7 ou 8, caractérisé en ce que la membrane (115) est une tôle mince en titane, en tantale ou en tungstène.

# FIG 1

# FIG 2

# FIG 3